# EUROPÄISCHE PATENTSCHRIFT

(11) **EP 3 155 890 B1**
(45) Veröffentlichungstag und Bekanntmachung des Hinweises auf die Patenterteilung: **08.01.2020**
(21) Anmeldenummer: 16193830.3
(22) Anmeldetag: 14.10.2016
(51) Int. Cl.: A01F 15/08

(54) **SELBSTFAHRENDE BALLENPRESSE**
AUTOMOTIVE BALING PRESS
PRESSE A BALLES AUTOMOTRICE

(30) Priorität: 15.10.2015 DE 102015117585
(43) Veröffentlichungstag der Anmeldung: 19.04.2017
(73) Patentinhaber: Brielmaier Motormäher GmbH, 88048 Friedrichshafen (DE)
(72) Erfinder: BRIELMAIER, Martin, 88048 Friedrichschafen (DE)
(74) Vertreter: Patentanwälte und Rechtsanwalt Weiß, Arat & Partner mbB

(56) Entgegenhaltungen:
- EP-A1- 1 174 019
- EP-A1- 1 618 779
- EP-A1- 1 731 010
- WO-A2-94/24845
- WO-A2-2005/053377
- US-A1- 2010 283 218

## Beschreibung

### Technisches Gebiet

Die Erfindung betrifft eine Ballenpresse nach dem Oberbegriff des Anspruchs 1 sowie ein Verfahren zur Herstellung einer Ballenpresse gemäß Anspruch 4.

### Stand der Technik

Die WO 92/24845 A1 beschreibt eine landwirtschaftliche Maschine, insbesondere eine Großballenpresse. Die landwirtschaftliche Maschine weist einen eigenen Antrieb auf und ist als selbstfahrendes und zusätzlich lenkbares Fahrzeug ausgerichtet
Weiter wird auf die WO 2005/053377A2 hingewiesen. Dort ist eine sogenannte Aufnahme-und Sammelpresse offenbart. Die hier offenbarte Vorrichtung stellt insbesondere heraus, dass eine Presseinrichtung vorhanden ist, welche einen in etwa zylinderförmigen Pressraum zum Herstellen von Ballen aufweist. Daneben wird auf die US 2010/0283218 A1 hingewiesen. Dort ist ebenfalls ein landwirtschaftliches Gerät gezeigt, welches selbstständig arbeiten soll.
Auch wird auf die EP 1618779 A1 hingewiesen, welche insbesondere einen Tragrahmen für eine Ballenpresse zum Pressen von landwirtschaftlichem Ernte gut zeigt, wobei mit einer in Fahrtrichtung verlaufenden Längswand und einem quer dazu angeordneten vorderen und hinteren Querrahmen gearbeitet wird. Die EP 1 174 019 A1 zeigt ebenfalls eine selbstfahrende Erntemaschine, wobei hier ein Elektroantrieb für verschiedene Handhabungen zum Einsatz kommen soll. Der Vollständigkeit halber wird außerdem auf die EP 1731010 A1 hingewiesen welche eine Fahrzeugstachelwalze offenbart.

In der Landwirtschaft kommen bei der Einfuhr von Erntegut, insbesondere von Schnitt-Erntegut, wie Heu und/oder Silage, Ballenpressen zum Einsatz, die das Schnitt-Erntegut aufnehmen und einer Ballenpresselement zuführen, das das Erntegut zu Ballen formt und presst. Die von dem Ballenpresselement geformten und gepressten Ballen werden im Regelfall für einen besseren

Zusammenhalt mit Wickelmaterial umspannt, bevor sie von der Ballenpresse ausgegeben werden.

In der Landwirtschaft kommen im Regelfall Ballenpressenanhänger zum Einsatz, die an eine Zugmaschine angehängt werden und beispielsweise über einen Zapfwellenantrieb von dem Antrieb der Zugmaschine angetrieben bzw. mit der benötigten Energie versorgt werden. Durch die Ballenpressenanhänger können entweder quaderförmige oder runde Ballen erzeugt werden. Ein solcher Ballenpressenanhänger zur Erzeugung von quaderförmigen Grossballen ist beispielsweise in der DE 10 2010 027 539 B3 offenbart.

Nachteilig an den Ballenpressen aus dem Stand der Technik ist, dass diese zusammen mit der Zugmaschine ein sehr hohes Gewicht aufweisen, weshalb insbesondere der Einsatz in feuchten Erntegebieten bzw. sumpfigen Erntegebieten nicht möglich ist, da die Ballenpressen aus dem Stand der Technik auf Grund des hohen Gewichts eine hohe Bodenverdichtung hervorrufen und zudem die Oberfläche und die dort befindlichen Pflanzen zerstören. Zudem ist der Einsatz in Gebirgslagen nur bedingt möglich, da die Ballenpressen sowie die Zugmaschinen im Regelfall einen hohen Schwerpunkt aufweisen, weshalb sie insbesondere an Steilhängen nicht nutzbar sind, was zu einem enormen Aufwand bei der Einfuhr der Ernte an Steilhängen führt, da das Erntegut zunächst in einen Bereich verbracht werden muss, der durch die Zugmaschine mit der Ballenpresse befahren werden kann.

### Aufgabe der Erfindung

Aufgabe der Erfindung ist es eine möglichst leichte und bodenschonende Ballenpresse zur Verfügung zu stellen. Weiterhin ist es Aufgabe der Erfindung, dass die Ballenpresse eine hohe Wendigkeit aufweist und für den Einsatz in unwegsamem, steilem oder sumpfigem Gelände geeignet ist.

### Lösung der Aufgabe

Zur Lösung der Aufgabe führen die Merkmale nach dem Vorrichtungsanspruch 1 und dem Verfahrensanspruch 4. Vorteilhafte Ausgestaltungen sind in den Unteransprüchen beschrieben.

Eine erfindungsgemäße Ballenpresse wird zum Aufsammeln und Pressen von Erntegütern zu Ballen aus Erntegut genutzt. Die erfindungsgemäße Ballenpresse weist ein Fahrgestell auf, das eine Aufnahmevorrichtung und ein Ballenpresselement umfasst. Das Fahrgestell kann zumindest teilweise einstückig mit dem Ballenpresselement ausgebildet sein. Weiterhin besteht die Möglichkeit, dass die Aufnahmevorrichtung und das Ballenpresselement an einen Fahrgestellrahmen des Fahrgestells angebracht sind. Weiterhin weist das Fahrgestell der erfindungsgemäßen Ballenpresse zumindest eine Lenkachse auf und verfügt über einen eigenen Antrieb. Durch den eigenen Antrieb ist die Ballenpresse signalgesteuert und/oder ferngesteuert selbstfahrend.

Bei einer erfindungsgemäßen Ballenpresse handelt es sich um einen Vollautomaten, bei dem eine Fahrzeugführerkabine bzw. ein Platz für einen Fahrzeugführer nicht vorgesehen ist. Die Fern- und/oder Signalsteuerung der erfindungsgemäßen Ballenpresse erfolgt vorzugsweise durch einen Fahrzeugbediener über eine Funkfernsteuerung. Weiterhin besteht die Möglichkeit, dass die Steuerung über ein GPS-Signal und/oder mittels einer sensorbasierten Steuerung erfolgt.

Die Steuerung der Ballenpresse erfolgt durch eine integrierte Elektronik, welche bspw. Eingangssignale der Funkfernsteuerung auswertet und an die Elemente der Ballenpresse wie z. B. die Lenksachse und/oder die Aufnahmevorrichtung und/oder das Ballenpresselement weitergibt.

Die Steuerung und die zugehörige Elektronik kann abhängig vom Ausführungsbeispiel auch GPS Daten nutzen, um für die Aufnahme des Ernteguts bspw. einem zuvor beim Schwaden des Ernteguts aufgezeichnetem Pfad zu folgen.

Weiterhin besteht die Möglichkeit, dass im Bereich der Fläche, in der das Erntegut aufgenommen werden soll für die Navigation der Ballenpresse Peilsender aufgestellt werden, deren Signale durch Sensoren der Ballenpresse erfasst werden und an die Steuerung weitergegeben werden, welche wiederum die einzelnen Bauteile der Ballenpresse ansteuert.

Zudem besteht auch die Möglichkeit, dass Systeme, wie sie bereits aus dem Kraftfahrzeugbereich für das autonome Fahren bekannt sind, in der Ballenpresse integriert werden und diese somit vollautomatisch das Erntegut aufnimmt und zu Ballen presst und dabei über die Steuerung und Sensoren in der Ballenpresse auch auf unerwartete Hindernisse, bspw. Personen reagiert und nötige Schritte, wie z. B. ein Abbremsen oder Anhalten der Ballenpresse einleitet.

Durch den eigenen Antrieb, im Folgenden nur noch als Antrieb bezeichnet, werden die einzelnen Komponenten der Ballenpresse mit Energie versorgt. Dadurch kann auf ein zusätzliches Zugfahrzeug, welches bei Ballenpressenanhängern aus dem Stand der Technik benötigt wird, verzichtet werden, wodurch das Gesamtgewicht der Ballenpresse deutlich reduziert werden kann. Hierdurch wird der Untergrund der Fläche, auf der die Ballenpresse das Erntegut aufnimmt, weniger belastet und es tritt bspw. eine geringere Bodenverdichtung ein. Dies ist insbesondere in Feuchtgebieten und/oder sumpfigen Gebieten von Vorteil, da dadurch der Untergrund geschont werden kann, und zudem auch die Oberfläche der Erntefläche weniger belastet wird. Durch den eigenen Antrieb werden unter anderem die Lenkung angesteuert, einzelne Achsen und/oder Radelemente über Radantriebe angetrieben und die Aufnahmevorrichtung für das Ballenpresselement sowie das Ballenpresselement mit der benötigen Energie versorgt.

Bei dem Antrieb handelt es sich im Ausführungsbeispiel um einen Verbrennungsmotor. Die Kraft-/Energieversorgung der einzelnen Komponenten der erfindungsgemäßen Ballenpresse kann bspw. über Getriebeelemente und Wellenelemente erfolgen, wie sie aus dem Stand der Technik bekannt sind.

Bevorzugt steht der Antrieb der Ballenpresse jedoch mit einem Hydraulikaggregat in Wirkverbindung, welches über Hydraulikleitungen die einzelnen Komponenten der Ballenpresse wie bspw. die Lenkung und das Ballenpresselement mit Energie versorgt. Hierbei erfolgt die Lenkung bspw. über Hydraulikzylinder.

In einem weiteren bevorzugten Ausführungsbeispiel erfolgt die Kraft-/Energieversorgung der einzelnen Elemente der Ballenpresse durch ein elektrisches Versorgungssystem. Hierbei umfasst die Ballenpresse. Auch die Elemente des Ballenpresselementes sowie die Aufnahmevorrichtung werden hierbei vorzugsweise über einen Elektromotor angetrieben.

Gemäß der Erfindung ist zumindest eine Spurweite einer Achse der Ballenpresse verstellbar ausgebildet. Dadurch kann unter anderem der Einsatz der Ballenpresse auch im Gebirge an Steilhängen ermöglicht werden.

In einem bevorzugten Ausführungsbeispiel ist die Spurweite der Lenkachse der Ballenpresse verstellbar ausgebildet. Für ein einfaches Verstellen/Verbreitern der Spurweite, der in der Spurweite verstellbaren Achse, ist die in der

Spurweite verstellbare Achse gemäß der Erfindung über ein Hubelement anhebbar ausgebildet. Bei dem Hubelement handelt es sich um ein hydraulisches Hubelement. Bei dem hydraulischen Hubelement handelt es sich bspw. um Hydraulikzylinder, welche an dem Fahrgestellt, bspw. an dem Fahrgestellrahmen, befestigt sind. Zum Anheben der in der Spur verstellbaren Achse umfassen die Hydraulikzylinder auf einer dem Boden zugerichteten Seite Stützplatten die vorzugsweise ein möglichst bodenschonendes Abstützen der Ballenpresse beim Anheben der in der Spurweite verstellbaren Achse ermöglichen.

Die Lenkachse der Ballenpresse ist in einem Ausführungsbeispiel als Pendelachse ausgebildet. Durch den Begriff Pendelachse wird dabei eine Achse beschrieben, welche um ein Pendellager drehbar gelagert ist. Die Längsachse des Pendellagers ist dabei senkrecht zu der Lenkachse ausgebildet und weist eine im Wesentlichen der Fahrtrichtung entsprechende Ausrichtung auf.

Eine weitere Achse der Ballenpresse, welche sich im Regelfall im Bereich des Ballenpresselementes und somit in Fahrrichtung hinter der Aufnahmevorrichtung der Ballenpresse befindet, umfasst gemäß der Erfindung zumindest zwei unabhängig voneinander um die weitere Achse drehbare Schwingen. Gemäß der Erfindung umfassen die Schwingen eine Aufnahme für zumindest zwei Radelemente. Bei den Radelementen gemäß der Erfindung handelt es sich neben Reifen, wie sie regelmäßig in der Landwirtschaft zum Einsatz kommen und aus dem Stand der Technik bekannt sind, um zumindest eine Stachelwalze die bspw. in der EP 1 731 010 A1 offenbart ist. Auch eine Kombination aus den Stachelwalzen und den zuvor genannten Reifen ist möglich.

Durch die Anbringung von mehreren Radelemente, bspw. sechs Radelementen, wobei zwei Radelemente an der Lenkachse und vier Radelemente an den Schwingen der weiteren Achse angebracht sind, kann die Gewichtskraft der Ballenpresse auf die Vielzahl der Radelemente übertragen werden, wodurch ebenfalls der Boden und der Untergrund der Erntefläche geschont werden kann.

In einem weiteren Ausführungsbeispiel kann auch die weitere Achse als lenkbare Lenkachse ausgebildet sein. Hierfür sind bspw. an den Achslagern der weiteren Achse Lenkmotoren und/oder Lenkzylinder angebracht. In einem solchen Ausführungsbeispiel sind somit vorzugsweise sämtliche Achsen der Ballenpresse lenkbar ausgebildet. Dadurch kann die Wendigkeit nochmals stark erhöht werden.

In einem typischen Ausführungsbeispiel sind schwere Bauteile der Ballenpresse in der Ballenpresse bzw. am Fahrgestell der Ballenpresse bodennah angeordnet. Durch die bodennahe Anordnung schwerer Bauteile wie des Antriebs, der Aufnahmevorrichtung, des Ballenpresselementes, das Antriebs und/oder des Fahrgestells wird ein möglichst tiefer Schwerpunkt erreicht. Dadurch kann die Ballenpresse besser in steilen Hanglagen bspw. im Gebirgseinsatz zum Aufnehmen und Pressen von Erntegütern genutzt werden.

Bei den Erntegütern, welche durch die Ballenpresse im Regelfall aufgenommen und gepresst werden, handelt es sich typischer Weise um Schnittgüter, wie Gras, Heu und/oder Silage. Für eine Ausgabe von den zu Ballen gepressten Erntegütern umfasst das Ballenpresselement der Ballenpresse ein Ausgabeelement. Das Ausgabeelement legt den Ballen, der durch das Ballenpresselement erzeugt worden ist, nach dessen Fertigstellung im Regelfall hinter der Ballenpresse auf der Fläche ab, auf der zuvor das Erntegut durch die Ballenpresse aufgenommen worden ist. Weiterhin kann der Ballen, bevor dieser über das Ausgabeelement ausgegeben wird, durch die Ballenpresse auch an einen Platz bzw.in einen Bereich transportiert werden, an dem die gepressten Ballen gesammelt abgelegt werden sollen.

Weiterhin umfasst die Erfindung ein Verfahren zur Herstellung einer Ballenpresse aus einem Ballenpressenanhänger mit einem Ballenpresselement mit umfasster Aufnahmevorrichtung und Ausgabeelement. Für das Verfahren zur Herstellung der Ballenpresse aus dem Ballenpressenanhänger kommen dabei vorzugsweise gebrauchte Ballenpresseanhänger zum Einsatz, da diese günstig auf dem Gebrauchtmarkt erworben werden können. Das Verfahren zur Herstellung der erfindungsgemäßen vollautomatisch selbstfahrenden Ballenpresse aus dem Ballenpressenanhänger umfasst zumindest die folgenden Schritte:
- Integration des Ballenpresselements mit der Aufnahmevorrichtung und dem Ausgabeelement auf einem Fahrgestell
- Anbau eines eigenen Antriebs
- Anbau einer Lenkachse
- Anbau von Hubelementen
- Austausch der Radelemente des Ballenpressanhängers durch Schwingen
- Anbau von zumindest einem Radantrieb
- Anbau von Radelementen
- Anbau von Funk- und/oder Signalsteuerungselementen
- Verbinden des eigenen Antriebs mit dem Radantrieb und dem Ballenpresselement
- Verbinden der Funk- und/oder Signalsteuerungselemente mit dem eigenen Antrieb und/oder dem Radantrieb und/oder dem Ballenpresselement.

Eine so hergestellte Ballenpresse weist vorzugsweise dieselben vorteilhaften Merkmale wie die zuvor beschriebene Ballenpresse auf.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Figur 1: eine perspektivische schematische Ansicht einer erfindungsgemäßen Ballenpresse;
- Figur 2: eine weitere perspektivische Ansicht auf die Ballenpresse nach Figur 1;
- Figur 3: eine schematische Draufsicht auf die Ballenpresse nach Figur 1 mit geänderter Spurweite;

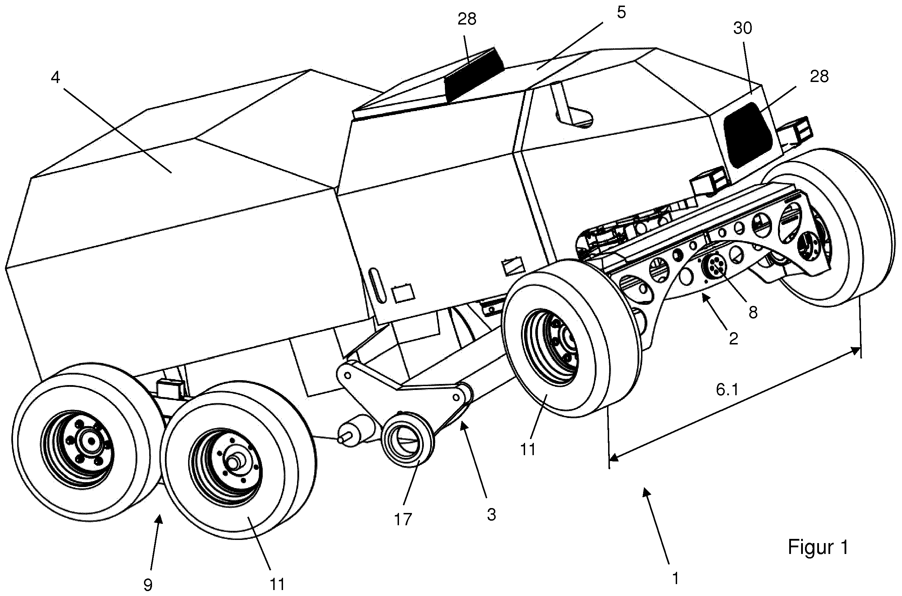

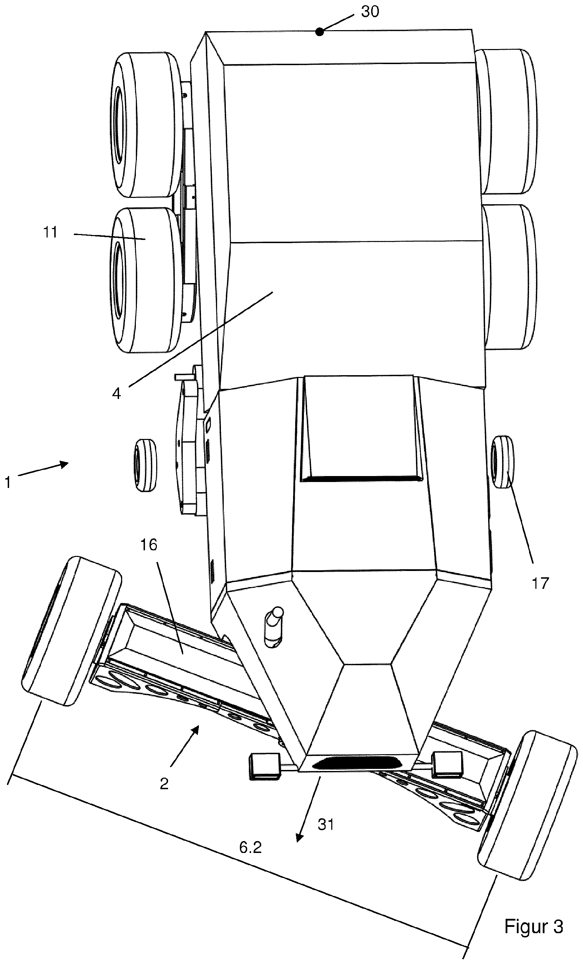

- Figur 3: eine schematische Ansicht einer Lenkachse der Ballenpresse nach Figur 1

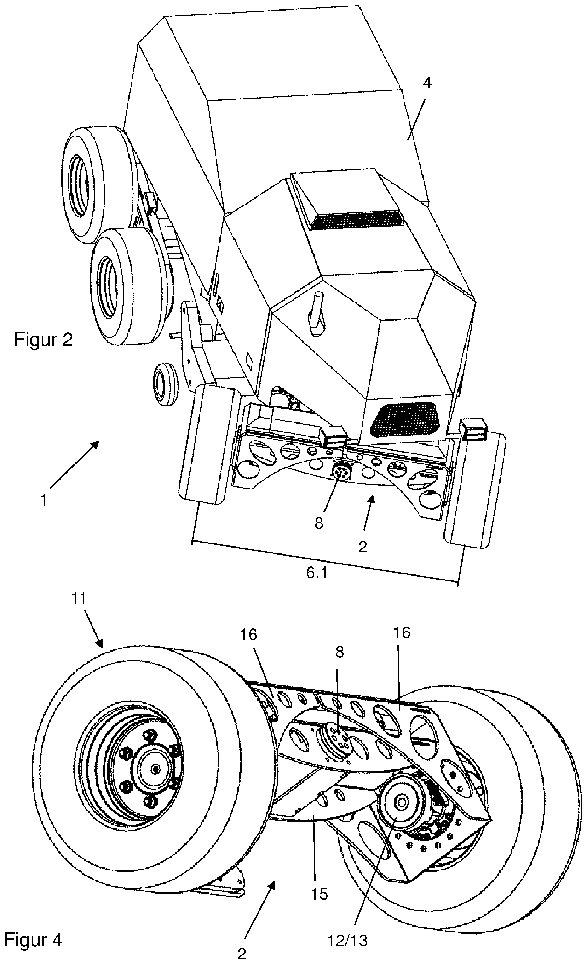

- Figur 4: eine schematische Seitenansicht der Ballenpresse nach Figur 1;

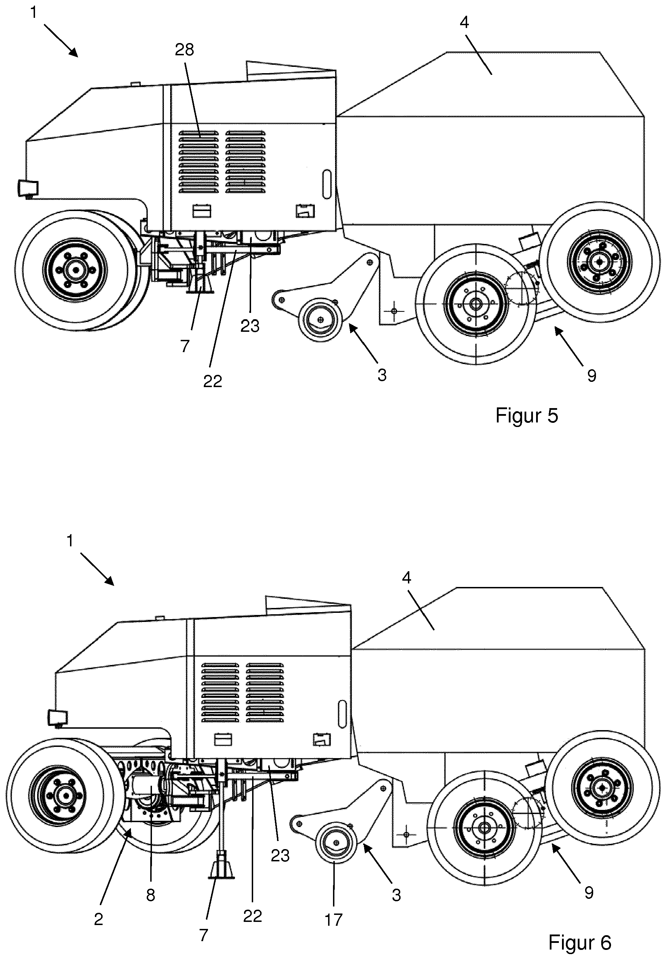

- Figur 5: eine schematische Ansicht der Ballenpresse nach Figur 4 mit einer angehobenen Lenkachse;
- Figur 6: eine schematische Ansicht von Hubelementen zur Anhebung der Lenkachse; und

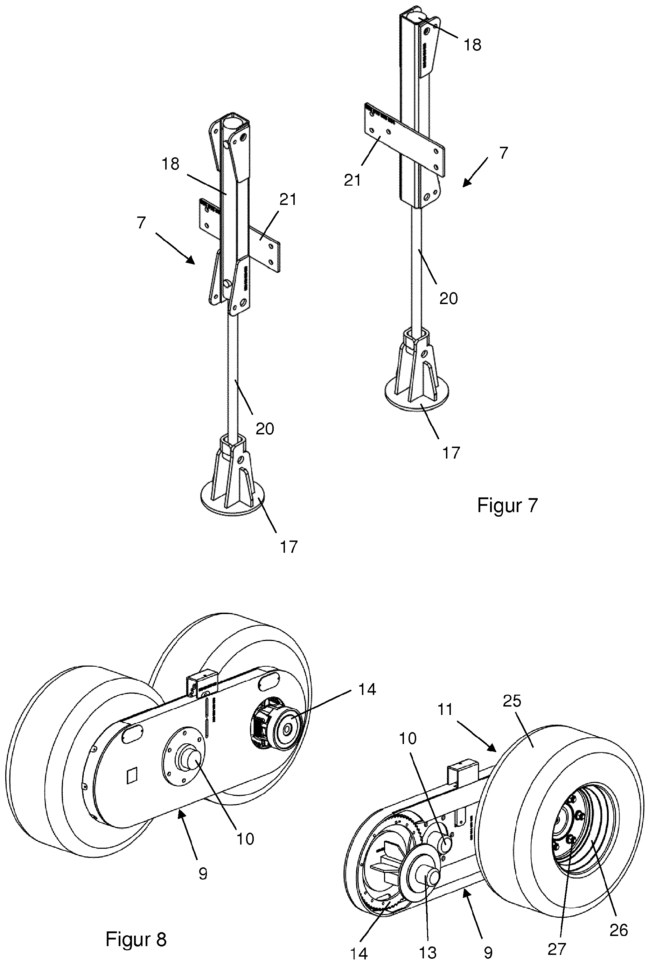

- Figur 7: eine schematische Darstellung von Schwingen der Ballenpresse nach Figur 1.

### Ausführungsbeispiel

Die Figuren 1 und 2 zeigen eine perspektivische Ansicht auf eine erfindungsgemäße Ballenpresse 1. Die Ballenpresse 1 weist ein Fahrgestell auf, das eine Aufnahmevorrichtung 3 und ein Ballenpresselement 4 umfasst bzw. an dem die Aufnahmevorrichtung 3 und das Ballenpresselement 4 angebracht sind.

Das Fahrgestell der erfindungsgemäßen Ballenpresse 1 weist zudem zumindest eine Lenkachse 2 sowie einen eigenen Antrieb auf, der in dem in den Figuren dargestellten Ausführungsbeispiel unter der Antriebsabdeckung 5 angeordnet ist. Bei der erfindungsgemäßen Ballenpresse 1 handelt es sich um einen Vollautomaten, der keine Führerkabine und/oder keinen Platz für einen Fahrzeugführer aufweist. Die erfindungsgemäße Ballenpresse 1 ist über den eigenen Antrieb signalgesteuert und/oder ferngesteuert selbstfahrend. In einem bevorzugten Ausführungsbeispiel ist die Lenkachse 2 auf einer Vorderseite 29 der Ballenpresse 1 angeordnet.

Die erfindungsgemäße Ballenpresse 1 wird zum Aufsammeln und Pressen von Erntegütern zu Ballen aus Erntegut genutzt. Hierfür wird dem Ballenpresselement 4 durch die Aufnahmevorrichtung 3 das Erntegut zugeführt und in dem Ballenpresselement 4 zu Ballen geformt und gepresst. Vorzugsweise werden die von dem Ballenpresselement 4 geformten und gepressten Erntegutballen für einen besseren Zusammenhalt mit Wickelmaterial umspannt bevor sie von der Ballenpresse 1 über das Ausgabeelement auf einer Rückseite 30 des Ballenpresselementes 4 der Ballenpresse 1 ausgegeben werden. Bei den Erntegütern handelt es sich im Regelfall Schnittgüter wie Gras, Heu und/oder Silage.

Aus den Figuren 2 und 3 ist ersichtlich, dass die Ballenpresse 1 zumindest eine Achse umfasst, die eine verstellbare Spurweite 6.1, 6.2 aufweist. In dem gezeigten Ausführungsbeispiel ist die Spurweite 6.1, 6.2 der Lenkachse 2 der Ballenpresse 1 verstellbar ausgeführt. Die Figuren 1 und 2 zeigen die Ballenpresse 1 mit einer Spurweite 6.1 der Lenkachse 2 in einer Grundstellung, die im Regelfall einer nicht verstellten Spurweite entspricht.

In Figur 3 ist die Ballenpresse 1 mit einer verstellten, erweiterten Spurweite 6.2 dargestellt. Durch die Erweiterung der Spurweite von zumindest einer Achse der Ballenpresse 1 kann die Kippanfälligkeit der Ballenpress minimiert werden. Dies wird dadurch bewerkstelligt, dass durch die verbreiterte Spurweite 6.2 derselbe Effekt erzeugt wird, den bspw. seitlich ausfahrbare Stützen eines Krans oder eines Hubsteigers erzeugen. Durch die verbreiterte Spurweite 6.2 wird ein seitlich größter Abstand einer Kippachse der Ballenpresse 1 zum Schwerpunkt der Ballenpresse 1 vergrößert. Die Kippachse beschreibt dabei eine Drehachse um die sich die Ballenpresse 1 im Falle eines Umkippens drehen im Wesentlichen drehen/kippen würde. Durch die verbreiterte Spurweite 6.2 kann ermöglicht werden, dass die Ballenpresse 1 auch in steilen Hanglagen von zumindest 45% Steigung eingesetzt werden kann ohne dass eine Gefahr des seitlichen Umkippens besteht. Somit ist die Ballenpresse auch für den Einsatz bei der Ernte von Erntegütern im Gebirge und Hochgebirge geeignet.

In einem Ausführungsbeispiel ist die Lenkachse 2 der Ballenpresse 1 als Pendelachse ausgeführt. Hierfür ist die Lenkachse 2 über ein Pendellager 8 mit dem Fahrgestell und/oder einem Fahrgestellrahmen 23 (siehe Figur 6) der Ballenpresse 1 verbunden. Die Längsachse des Pendellagers 8 weist in einem typischen Ausführungsbeispiel im Wesentlichen dieselbe Ausrichtung wie eine Fahrtrichtung 31 der Ballenpresse 1 auf. Die Längsachse des Pendellagers 8 ist vorzugsweise senkrecht zu der Lenkachse 2 ausgerichtet.

Um die Spurweite 6.1, 6.2 der Lenkachse 2 verstellen zu können, umfasst die in Figur 4 dargestellte Lenkachse 2 einen Achsträger 15, auf dem zwei Spurweitenverstellelemente 16 verschiebbar angeordnet sind. Die Spurweitenverstellelemente 16 können abhängig vom Ausführungsbeispiel mechanisch, über Elektromotoren oder über Hydraulikzylinder verstellt werden.

Vorzugsweise werden die Spurweitenverstellelemente 16 bei der Verstellung der Spurweite 6.1, 6.2 symmetrisch auf dem Achsträger 15 nach außen oder innen verschoben. Jedoch ist es auch möglich, die Spurweitenverstellelemente 16 asymmetrisch auf dem Achsträger 15 nach innen oder außen zu verschieben und zu verstellen.

An dem Pendellager 8 gegenüberliegenden Enden der Spurweitenverstellelemente 16 umfasst die Lenkachse 2 jeweils zumindest eine Radnabe 13, die zur Aufnahme eines Radelementes 11 geeignet ist. In einem bevorzugten Ausführungsbeispiel umfassen die Radnaben 13 der Lenkachse 2 einen Radantrieb 12, der über den eigenen Antrieb der Ballenpresse 1 mit Energie versorgt wird, und die Radelemente 11 der Lenkachse 2 in Drehung versetzen kann und somit für einen Vorschub der Ballenpresse 1 sorgt. Der Radantrieb 12 der Lenkachse 2 ist erfindungsgemäß ein Hydraulikmotor oder ein Elektromotor.

Für das Verstellen der Spurweite umfasst die Ballenpresse 1 erfindungsgemäß, wie in den Figuren 6 und 7 dargestellt, zumindest ein Hubelement 7.

Bei dem Hubelement 7 handelt es sich erfindungsgemäß um ein hydraulisches Hubelement 7, welches einem Hydraulikzylinder 18 umfasst, an dessen Kolbenelement an einer dem Boden zugewandten Seite eine Stützplatte 19 angeordnet ist. Das Hubelement 7 kann, wie in den Figuren 6 und 7 dargestellt, über Befestigungselemente 21 an einem Fahrgestellrahmen 23 befestigt werden. Zur Verstellung der Spurweite 6.1, 6.2 der Lenkachse 2 der Ballenpresse 1 wird mit Hilfe der Hubelemente 7 der Bereich der verstellbaren Achse, in dem gezeigten Ausführungsbeispiel der Bereich in dem sich die Lenkachse 2 befindet, angehoben, so dass die Lenkachse 2 keinen Bodenkontakt mehr hat und die Spurweite der Lenkachse 2 über die Spurweitenverstellelemente 16 geändert werden kann.

Erfindungsgemäß umfasst eine weitere Achse 24 zwei unabhängig voneinander um die weitere Achse 24 drehbare Schwingen 9. Die Schwingen 9, die in Figur 8 separat gezeigt sind, umfassen Aufnahmen für zumindest zwei Radelemente 11. Vorzugsweise sind die Aufnahmen für die Radelemente 11 der Schwingen 9 als Radnaben 13 ausgebildet. Zumindest in und/oder an einer Radnabe 13 der Schwinge 9 ist ein Radantrieb 12 angeordnet. In dem dargestellten Ausführungsbeispiel ist außer an den Radnaben 13 der Lenkachse 2 in jeder Schwinge 9 ein separater Radantrieb 12 integriert. Bei den dargestellten Radantrieben 12 handelt es sich um Hydraulikmotoren. Weiterhin können beispielsweise auch Elektromotoren als Radantriebe 12 genutzt werden.

In den Schwingen 9 wird die Antriebskraft der Radantriebe 12 über einen Kettentrieb auf ein Kettenrad 14 übertragen. Das Kettenrad 14 steht mit der Radnabe 13 der Schwinge in Wirkverbindung, an die kein separater Radantrieb 12 angebracht und/oder integriert ist. In einem nicht dargestellten Ausführungsbeispiel ist jeder Radnabe 13 der Schwingen 9 ein separater Radantrieb zugeordnet. Die Radantriebe 12 werden vorzugsweise von dem eigenen Antrieb der Ballenpresse 1 angetrieben oder zumindest mit der benötigten Energie für die Erzeugung der Antriebskraft für den Vorschub der Ballenpresse 1 versorgt.

Die Schwingen 9 der weiteren Achse 24 sind über Achslager 10 mit dem Fahrgestell der Ballenpresse und/oder dem Ballenpresselement 4 verbunden. Das Achslager 10 fungiert dabei als Drehlager, wobei die Schwingen 9 unabhängig voneinander um das jeweilige Achslager 10 verdrehbar sind. Durch die Lagerung der Lenkachse 2 auf dem Pendellager 8 sowie die unabhängig voneinander verdrehbare Lagerung der Schwingen 9 über die Achslager 10 auf der weiteren Achse 24 sind die Achsen der Ballenpresse 1 sowie die Schwingen der weiteren Achse 24 zueinander entkoppelt bewegbar. Dadurch kann eine sehr hohe Geländegängigkeit mit ständigem Kontakt der Radelemente 11 zum Boden garantiert werden, wodurch die Gefahr eines Kippens der Ballenpresse in steilen Hanglagen ebenfalls minimiert werden kann.

In dem dargestellten Ausführungsbeispiel umfassen die Radelemente 11 eine Felge 26 auf der ein Reifen 25 angebracht ist, wobei die Felge 26 über Verbindungselemente 27 an den Radnaben 13 der Schwingen 9 und der Lenkachse 2 angebracht sind. Erfindungsgemäß bestehen die Radelemente 11 aus Stachelwalzen, wie sie bspw. in der EP 1 731 010 A1 dargestellt sind. Auch eine Kombination von Stachelwalzen und Radelementen 11, wie sie in dem Ausführungsbeispiel dargestellt sind und/oder bei landwirtschaftlichen Maschinen üblich sind, ist möglich. Bei kombinierten Radelementen 11 aus Reifen 25 und Stachelwalze werden die Stachelwalzen vorzugsweise an der Felge 26 des Radelementes 11 angebracht. Auch ein direktes Anbringen der Stachelwalzen an den Radnaben 13 ist möglich.

Bei dem Antrieb der Ballenpresse 1 der unter der Antriebsabdeckung 5 mit den Lufteinlässen und Luftauslässen 28 angeordnet ist, handelt es sich in einem Ausführungsbeispiel um einen Verbrennungsmotor wie er aus dem Stand der Technik bekannt ist. Weiterhin kann der Antrieb der Ballenpresse 1 auch ein Elektromotor oder ein Hybridmotor sein, die ebenfalls aus dem Stand der Technik bekannt sind.

In einem typischen Ausführungsbeispiel sind die schweren Bauteile der Ballenpresse 1 wie der Antrieb, die Aufnahmevorrichtung 3, der Fahrgestellrahmen 22, das Ballenpresselement 4 und/oder das Fahrgestell bodennah angeordnet. Dadurch kann ein tiefer Schwerpunkt erreicht werden, der wiederrum die Nutzung der Ballenpresse 1 auch in Steillagen insbesondere im Gebirgseinsatz ermöglicht.

Sofern als Antrieb ein Hybrid- und/oder Elektromotor zum Einsatz kommt werden die Akkumulatoren eines elektrischen System vorzugsweise ebenfalls möglichst bodennah angeordnet, wodurch ebenfalls der Schwerpunkt der Ballenpresse 1 zum Boden hin abgesetzt werden kann. Beim Einsatz eines Hybrid- oder Elektromotors können die Radantriebe 12, bei denen es sich dann vorzugsweise um Elektromotoren handelt, während eines Bremsvorgangs zur Bremsenergierückgewinnung genutzt werden.

In dem, in den Figuren gezeigten Ausführungsbeispiel der Ballenpresse 1 steht der Antrieb der Ballenpresse 1 mit einem Hydraulikaggregat in Wirkverbindung. Das Hydraulikaggregat wird dazu genutzt Hydrauliköl unter Druck zu setzen. Das unter Druck gesetzte Hydrauliköl kann für die Versorgung der Hydraulikzylinder 18 zum Anheben der in der Spurweite 6.1, 6.2 verstellbaren Lenkachse 2 genutzt werden, sowie für die Verstellung der Spurweite 6.1, 6.2 mittels Hydraulikzylinder.

Weiterhin erfolgt die Lenkung der Lenkachse 2 der Ballenpresse 1 in dem dargestellten Ausführungsbeispiel über längs angeordnete Lenkzylinder 22 (siehe Figur 6), wobei die Lenkzylinder 22 ebenfalls über das Hydrauliköl, welches von dem Hydraulikaggregat unter Druck gesetzt wird, ein- und ausfahrbar sind. Weiterhin handelt es sich bei dem Ballenpresselement 4 beispielsweise um ein hydraulisch angetriebenes Ballenpresselement 4 zur Herstellung von Rundballen, das ebenfalls über das Hydraulikaggregat mit unter Druck gesetzten Hydrauliköl versorgt werden kann.

Die Fern- und/oder Signalsteuerung der Ballenpresse 1 erfolgt in einem typischen Ausführungsbeispiel durch einen Anwender über eine Funkfernsteuerung. Hierfür umfasst die Ballenpresse 1 Steuerungselemente für die Ansteuerung der einzelnen Elemente der Ballenpresse 1 und die Umsetzung von empfangenen Steuersignalen. Weiterhin weist die Ballenpresse 1 für die Steuerung Empfangs- und Sendeelemente für den Signalaustausch mit einer Funkfernsteuerung auf.

In einem weiteren Ausführungsbeispiel erfolgt die Signalsteuerung über ein GPS Signal. Dabei folgt die Ballenpresse 1 bspw. einem zuvor beim Schwadern des Ernteguts aufgezeichnetem Pfad, wodurch ein effizientes Arbeiten der Ballenpresse 1 ermöglicht werden kann.

In einem Ausführungsbeispiel umfasst die Ballenpresse weiterhin Sensorelemente, die bspw. dafür sorgen, dass die Ballenpresse nicht auf ein Hindernis auffährt oder einem Hindernis ausweichen kann. Auch der Einsatz von Kameras und/oder Sensoren zur Erfassung der Umgebung und des aufzunehmenden und zu pressenden Ernteguts, deren Daten einer Steuerungssoftware zugeführt werden ist möglich. Hierbei können insbesondere Systeme aus dem Bereich des autonomen Fahrens von Kraftfahrzeugen als Grundlage genutzt werden.

Weiterhin besteht die Möglichkeit, dass die Steuerung der Ballenpresse 1 über Sensoren die Position von Peilsendern erfasst und nutzt, wobei die Peilsender beispielsweise zuvor um eine Fläche auf der die Ballenpresse 1 zum Einsatz kommen soll, aufgestellt worden sind und zur Bestimmung der Route für die Aufnahme des Ernteguts genutzt werden.

Die Ballenpresse 1 kann derart gestaltet sein, dass die Fern- und/oder Signalsteuerung per Funkfernsteuerung, GPS-Signal und/oder mittels einer sensorbasierten Steuerung erfolgt.

Weiter kann die Ballenpresse 1 derart ausgeführt sein, dass durch das bodennahe Anordnen schwerer Bauteile, wie des Antriebs, der Aufnahmevorrichtung 3, des Ballenpresselements 4 und/oder des Fahrgestells.

Daneben kann auch vorgesehen sein, dass die Ballenpresse 1 als Antrieb einen Verbrennungsmotor oder ein Elektromotor oder ein Hybridmotor aufweist.

Zuletzt wird darauf hingewiesen, dass der Antrieb der Ballenpresse mit einem Hydraulikaggregat in Wirkverbindung stehen kann.

**Bezugszeichenliste**

| | | | | | |
|---|---|---|---|---|---|
| 1 | Ballenpresse | 34 | | | |
| 2 | Lenkachse | 35 | | | |
| 3 | Aufnahmevorrichtung | 36 | | | |
| 4 | Ballenpresselement | 37 | | | |
| 5 | Antriebsabdeckung | 38 | | | |
| 6 | Spurweite | 39 | | | |
| 7 | Hubelement | 40 | | | |
| 8 | Pendellager | 41 | | | |
| 9 | Schwinge | 42 | | | |
| 10 | Achslager | 43 | | | |
| 11 | Radelement | 44 | | | |
| 12 | Radantrieb | 45 | | | |
| 13 | Radnabe | 46 | | | |
| 14 | Kettenrad | 47 | | | |
| 15 | Achsträger | 48 | | | |
| 16 | Spurweitenverstellelement | 49 | | | |
| 17 | Bodenkontaktelement | 50 | | | |
| 18 | Hydraulikzylinder | 51 | | | |
| 19 | Stützplatte | 52 | | | |
| 20 | Kolbenelement | 53 | | | |
| 21 | Befestigungselement | 54 | | | |
| 22 | Lenkzylinder | 55 | | | |
| 23 | Fahrgestellrahmen | 56 | | | |
| 24 | weitere Achse | 57 | | | |
| 25 | Reifen | 58 | | | |
| 26 | Felge | 59 | | | |
| 27 | Verbindungselemente | 60 | | | |
| 28 | Luftein-/auslass | 61 | | | |
| 29 | Vorderseite | 62 | | | |
| 30 | Rückseite | 63 | | | |
| 31 | Fahrtrichtung | 64 | | | |
| 32 | | 65 | | | |
| 33 | | 66 | | | |

## Patentansprüche

1. Ballenpresse (1) zum Aufsammeln und Pressen von Erntegütern zu Ballen aus Erntegut, mit einem Fahrgestell, wobei das Fahrgestell eine Aufnahmevorrichtung (3) und ein Ballenpresselement (4) umfasst, wobei das Ballenpresselement (4) ein Ausgabeelement umfasst, wobei das Fahrgestell zumindest eine Lenkachse (2) aufweist und über einen eigenen Antrieb signalgesteuert und/oder ferngesteuert selbstfahrend ist und wobei zumindest ein Radantrieb (12) über einen Hydraulikmotor oder einen Elektromotor erfolgt,
**dadurch gekennzeichnet,**
**dass** eine weitere Achse zumindest zwei unabhängig voneinander um die weitere Achse drehbare Schwingen (9) umfasst, wobei die Schwingen (9) eine Aufnahme für zumindest zwei Radelemente umfasst und die Radelemente (11) eine Stachelwalze umfassen, wobei zumindest eine Spurweite (6) einer Achse der Ballenpresse (1) verstellbar ist, wobei die in der Spurweite (6) verstellbare Achse über ein Hubelement (7) anhebbar ist mit einem hydraulischen Hubelement (7), wobei ein Kettentrieb eine Antriebskraft auf ein weiteres Radelement (11) überträgt, wobei sämtliche Achsen voneinander entkoppelt bewegbar sind.

2. Ballenpresse (1) nach Anspruch 1, **dadurch gekennzeichnet, dass** die Spurweite der Lenkachse (2) verstellbar ist.

3. Ballenpresse (1) nach einem der vorherigen Ansprüche, **dadurch gekennzeichnet, dass** die Lenkachse (2) eine Pendelachse ist.

4. Verfahren zur Herstellung einer Ballenpresse (1) aus einem Ballenpressenanhänger mit einem Ballenpresselement (4) mit umfasster Aufnahmeeinrichtung und Ausgabeelement nach den Ansprüchen 1 bis 3 **gekennzeichnet durch** folgende Schritte:
- Integration des Ballenpresselements (4) mit der Aufnahmevorrichtung (3) und dem Ausgabeelement auf einem Fahrgestell
- Anbau eines eigenen Antriebs
- Anbau einer Lenkachse (2)
- Anbau von Hubelementen (7)
- Austausch der Radelemente (11) des Ballenpressanhängers durch Schwingen (9)
- Anbau von zumindest einem Radantrieb (12)
- Anbau von Radelementen (11)
- Anbau von Funk- und/oder Signalsteuerungselementen
- Verbinden des eigenen Antriebs mit dem Radantrieb (12) und dem Ballenpresselement (4)
- Verbinden der Funk- und/oder Signalsteuerungselemente mit dem eigenen Antrieb und/oder dem Radantrieb (12) und/oder dem Ballenpresselement (4).

## Claims

1. Baling press (1) for collecting and pressing harvested crops into bales of harvested crop, with a chassis, whereby the chassis has a receiving device (3) and a bale pressing element (4), said bale pressing element (4) comprising a output element, wherein the chassis comprises at least one steering axle (2) and is by means of its own drive signal-controlled and/or remote-controlled self-propelled, and wherein at least one wheel drive (12) takes place via a hydraulic motor or an electric motor,
**characterized in that**
a further axis comprises at least two rotatable swivels (9) independently of each rotating about the further axis, the swivels (9) comprise a mounting for at least two wheel elements and
the wheel elements (11) comprise a spiked roller, wherein at least one track width (6) of an axle of the baling press (1) is adjustable, wherein the axle being adjustable in the track width (6) can be lifted via a lifting element (7) with a hydraulic lifting element (7), wherein a chain drive transfers a driving force to a further wheel element (11), all the axles being moveable decoupled from each other.

2. Baling press (1) according to claim 1, **characterized in that** the track width of the steering axle (2) is adjustable.

3. Baling press (1) according to one of the previous claims, **characterized in that** the steering axle (2) is a pendulum axle.

4. Method for producing a baling press (1) from a bale press trailer with one bale press element (4) with comprised receiving means and output element according to claims 1 to 3, **characterized by** the following steps:
- Integration of the baling press element (4) with the receiving device (3) and the output element on a chassis
- Mounting an own drive
- Mounting a steering axle (2)
- Mounting of lifting elements (7)
- Replace the wheel elements (11) of the baling press trailer with swivels (9)
- Mounting of at least one wheel drive (12)
- Mounting of wheel elements (11)
- Mounting of radio and/or signal control elements
- Connecting the own drive to the wheel drive (12) and the baling press element (4)
- Connecting the radio and/or signal control elements to the own drive and/or the wheel drive (12) and/or the bale press element (4).

## Revendications

1. Presse à balles (1) pour recueillir et presser des produits de récolte pour obtenir des balles de produits de récolte, avec un châssis, le châssis comprenant un dispositif de réception (3) et un élément de presse à balles (4), l'élément de presse à balles (4) comportant un élément de sortie, le châssis présentant au moins un essieu de direction (2) et étant automoteur commandé par signal par l'intermédiaire de son propre entraînement et/ou télécommandé, et au moins un entraînement par roue (12) ayant lieu par l'intermédiaire d'un moteur hydraulique ou d'un moteur électrique,
**caractérisée par le fait**
**qu'**un autre essieu comporte au moins deux bras basculants (9) qui peuvent tourner indépendamment l'un de l'autre autour de l'autre essieu, les bras basculants (9) comportant un moyen de réception d'au moins deux éléments de roue et les éléments de roue (11) comportant un rouleau à dents, au moins une largeur de piste (6) d'un essieu de la presse à balles (1) étant réglable, l'essieu réglable quant à la largeur de piste (6) pouvant être enlevé par l'intermédiaire d'un élément de levage (7) à l'aide d'un élément de levage hydraulique (7), un entraînement par chaîne transmettant une force d'entraînement à un autre élément de roue (11), tous les axes étant déplaçables de manière découplée l'un de l'autre.

2. Presse à balles (1) selon la revendication 1, **caractérisée par le fait que** la largeur de piste de l'essieu de direction (2) est réglable.

3. Presse à balles (1) selon l'une des revendications précédentes, **caractérisée par le fait que** l'essieu de direction (2) est un essieu pendulaire.

4. Procédé de fabrication d'une presse à balles (1) à partir d'une remorque de presse à balles avec un élément de presse à balles (4) avec un dispositif de réception et un élément de sortie inclus selon les revendications 1 à 3, **caractérisé par** les étapes suivantes:
- intégration de l'élément de presse à balles (4) avec le dispositif de réception (3) et l'élément de sortie sur un châssis
- fixation d'un propre entraînement
- fixation d'un essieu de direction (2)
- fixation d'éléments de levage (7)
- remplacement des éléments de roue (11) de la remorque de presse à balles par des bras basculants (9)
- fixation d'au moins un entraînement par roue (12)
- fixation d'éléments de roue (11)
- fixation d'éléments de commande radio et/ou par signal
- connexion de l'entraînement propre avec l'entraînement par roue (12) et l'élément de presse à balles (4)
- connexion des éléments de commande radio et/ou par signal avec l'entraînement propre et/ou l'entraînement par roue (12) et/ou l'élément de presse à balles (4).
